# EUROPÄISCHE PATENTSCHRIFT

(11) **EP 2 057 035 B1**
(45) Veröffentlichungstag und Bekanntmachung des Hinweises auf die Patenterteilung: **21.07.2010**
(21) Anmeldenummer: 07788249.6
(22) Anmeldetag: 06.08.2007
(51) Int. Cl.: B60Q 1/04, B62D 25/08, B62D 29/04

(54) **HALTERUNG FÜR EINE SCHEINWERFEREINHEIT, VERFAHREN ZUR DEREN HERSTELLUNG UND FRONTEINHEIT**
FIXTURE FOR A HEADLIGHT UNIT, METHOD FOR THE PRODUCTION THEREOF, AND FRONT UNIT
FIXATION POUR UNE UNITÉ DE PHARE, PROCÉDÉ DE PRODUCTION ASSOCIÉ ET UNITÉ AVANT

(30) Priorität: 24.08.2006 DE 102006039627
(43) Veröffentlichungstag der Anmeldung: 13.05.2009
(73) Patentinhaber: Faurecia Kunststoffe Automobilsysteme GmbH, 85057 Ingolstadt (DE)
(72) Erfinder: BECHER, Harald, 85084 Reichertshofen (DE); JOLY-POTTUZ, Pascal, 85101 Lenting (DE)
(74) Vertreter: Richardt, Markus Albert
(86) Internationale Anmeldenummer: PCT/EP2007/058135
(87) Internationale Veröffentlichungsnummer: WO 2008/022904

(56) Entgegenhaltungen:
- EP-A- 1 293 379
- DE-A1-102004 057 678
- FR-A- 2 783 774

## Beschreibung

Die Erfindung betrifft eine Halterung für eine Scheinwerfereinheit, ein Verfahren zu deren Herstellung und eine Fronteinheit für ein Kraftfahrzeug.

### Stand der Technik

Aus der EP 1 232 932 A1 ist ein Träger für die Fronteinheit eines Kraftfahrzeugs mit einem Trägerteil zur Verbindung mit den Kotflügeln und dem Fahrgestell des Kraftfahrzeugs bekannt. An dem Trägerteil wird ein Fassungsteil zur Aufnahme einer Scheinwerfereinheit und zur Verbindung mit einem Stoßfänger befestigt. Zur Erleichterung der Montage und zur Verbesserung des Fugenbildes ist an der Scheinwerfereinheit ein Positionierstift angeordnet, der in eine entsprechende Ausnehmung an der Kotflügelbank eingeführt wird.

Weitere ähnliche Fronteinheiten sind aus der FR 2 809 061 A1, DE 199 46 995 A1, DE 196 47 928 A1, EP 0 945 330 A2, EP 1 036 730 A2, DE 10 2004 057 678 A1 und DE 10 2005 013 107 B3 bekannt.

JP 2002-274252 zeigt eine Halterung für eine Scheinwerfereinheit eines Kraftfahrzeugs. Die Scheinwerfereinheit weist Befestigungsmittel zur Befestigung der Halterung an einem Trägerteil einer Fronteinheit eines Kraftfahrzeugs auf. Die Befestigungsmittel werden im Wesentlichen durch ein Scharnier gebildet, bei dem die Halterung angelenkt ist und das mittels Schraubverbindungen am Trägerteil fixiert ist. Das Scharnier kann dabei als erstes elastisches bzw. flexibles Mittel angesehen werden. Die Halterung weist ferner ein zweites elastisch ausgebildetes Mittel, welches vom ersten elastischen Mittel beabstandet ist, auf sowie einen Aufnahmebereich für die Scheinwerfereinheit. Der Aufnahmebereich erstreckt sich dabei zwischen den ersten und zweiten elastischen Mitteln.

EP 1 634 800 A1 zeigt eine Fronteinheit für ein Kraftfahrzeug mit einer Stoßstange und einer Scheinwerfereinheit, wobei ein Träger einen Aufnahmebereich für die Scheinwerfereinheit aufweist und auch über Befestigungsmittel zur Befestigung des Trägers an einem Trägerteil einer Fronteinheit eines Kraftfahrzeugs verfügt. Der Träger ist dabei elastisch ausgebildet. Insbesondere weist der Träger einen flexiblen Bereich, der in Form einer Aussparung ausgebildet sein kann, auf.

EP 1 293 379 A1 zeigt eine Halterung gemäß dem Oberbegriff des Anspruchs 1 mit einer Befestigung von einem Ausrüstungsteil auf ein Teil der Baukarosseriestruktur, wobei das Ausrüstungsteil eine Befestigungsseite mit Befestigungsmitteln zur Befestigung auf dem Teil der Baukarosseriestruktur aufweist. Die Befestigungsmittel weisen mindestens ein erstes Zwischenbefestigungselement auf, das am Teil der Baukarosseriestruktur befestigt ist und Regelungsmittel für die Position des Ausrüstungsteils relativ zum Teil der Baukarosseriestruktur aufweist. Ferner weisen die Befestigungsmittel zumindest ein zweites Zwischenbefestigungselement auf, wobei das zweite Zwischenbefestigungselement elastische Elemente zwischen dem zweiten Zwischenbefestigungselement und dem Ausrüstungsteil aufweist.

### Aufgabenstellung

Der Erfindung liegt demgegenüber die Aufgabe zugrunde, eine verbesserte Halterung für eine Scheinwerfereinheit und ein Verfahren zur deren Herstellung sowie eine Fronteinheit mit einer solchen Halterung zu schaffen.

### Erfindungsgemäße Lösung der Aufgabe

Die der Erfindung zugrunde liegenden Aufgaben werden jeweils mit den Merkmalen der unabhängigen Patentansprüche gelöst. Bevorzugte Ausführungsformen der Erfindung sind in den abhängigen Ansprüchen angegeben.

Durch die Erfindung wird eine Halterung für eine Scheinwerfereinheit geschaffen, die einen Toleranzausgleich bei der Montage der Fronteinheit ermöglicht. Hierdurch kann das so genannte Fugenbild, insbesondere hinsichtlich der Fugen zwischen dem Stoßfänger und der Scheinwerfereinheit und zwischen der Scheinwerfereinheit und der Frontklappe verbessert werden.

Von besonderem Vorteil sind dabei die voneinander beabstandeten elastischen Mittel zwischen den Befestigungsmitteln und dem Aufnahmebereich für die Scheinwerfereinheit, die für eine erhöhte Stabilität der Halterung bei gleichzeitiger Wahrung der Toleranz Ausgleichmöglichkeit sorgen. Dies ist besonders vorteilhaft, um das so genannte Scheinwerferzittern zu vermeiden, welches sonst insbesondere bei Scheinwerfern mit relativ weit hinten liegendem Schwerpunkt auftreten kann.

Nach der Erfindung sind die ersten und zweiten elastischen Mittel so ausgebildet, dass der Aufnahmebereich für die Scheinwerfereinheit zum Einbau der Halterung in ein Kraftfahrzeug im Wesentlichen quer zur Fahrrichtung des Kraftfahrzeugs translatorisch verschiebbar ist.

Damit wird eine Toleranzausgleichsmöglichkeit in horizontaler Richtung, insbesondere in y-Richtung geschaffen, die es erlaubt, die Halterung für die Scheinwerfereinheit auch bei größeren Fertigungstoleranzen in das Kraftfahrzeug einzubauen. Damit werden letztenendes auch kostengünstige Halterungen realisiert, da der Ausschuss an Halterungen aufgrund größerer zulässiger Herstellungstoleranzen vermindert wird.

Ferner ist aufgrund der translatorischen Verschiebbarkeit des Aufnahmebereichs im Gegensatz zu z.B. einer rotatorischen Bewegung des Aufnahmebereichs relativ zur Halterung sichergestellt, dass kein Nachjustieren der montierten Scheinwerfereinheit notwendig ist, um sicherzustellen, dass die Scheinwerfereinheit auch wirklich in Fahrtrichtung des Fahrzeugs ausgerichtet ist.

Nach der Erfindung verlaufen die beiden elastischen Mittel in entgegen gesetzter Richtung gekrümmt. Vorzugsweise ist das vordere elastische Mittel nach vorne gekrümmt, wohingegen das hintere elastische Mittel nach hinten gekrümmt verläuft. Dadurch wird ein hohes Maß an Stabilität für die Scheinwerfereinheit bei gleichzeitiger Toleranzausgleichsmöglichkeit geschaffen. Es sind aber auch andere Krümmungsverläufe möglich, insbesondere im Wesentlichen gleichsinnige Krümmungsverläufe der elastischen Mittel.

Nach einer Ausführungsform der Erfindung wird durch die beiden elastischen Mittel ein balgförmiger Bereich gebildet, der sich durch Ziehen oder Drücken bei der Montage verformen lässt, um so einen Toleranzausgleich in der Horizontalen, d.h. in y-Richtung, zu schaffen.

Nach einer Ausführungsform der Erfindung wird die Halterung durch ein Kunststoffspritzgussverfahren hergestellt. Die Wandstärke ist dabei im Bereich der elastischen Mittel so gewählt, dass eine Verformung bei der Montage zum Toleranzausgleich möglich ist.

Nach einer Ausführungsform der Erfindung hat die Halterung einen Positionierstift zur Montage an einer Kotflügelbank des Kraftfahrzeugs. Der Positionierstift ist bezüglich der elastischen Mittel auf der anderen Seite des Aufnahmebereichs angeordnet.

Nach einer Ausführungsform der Erfindung hat die von dem Aufnahmebereich aufzunehmende Scheinwerfereinheit einen Schwerpunkt, der relativ weit in x-Richtung hinten liegt. Der Aufnahmebereich ist so gestaltet, dass er sich im Wesentlichen bis zu der x-Koordinate des Schwerpunkts oder darüber hinaus nach hinten erstreckt.

Nach einer Ausführungsform der Erfindung ist der Aufnahmebereich so ausgebildet, dass der Boden der Scheinwerfereinheit im Wesentlichen vollständig mit dem Aufnahmebereich überlappt. Der Aufnahmebereich ist daher so groß, dass der Boden der Scheinwerfereinheit im Wesentlichen komplett vom Aufnahmebereich umfasst wird. Damit ist sichergestellt, dass ein Scheinwerferzittern auf den Aufnahmebereich übertragen wird und damit von den ersten und zweiten elastischen Mitteln kompensiert werden kann. Das Scheinwerferzittern wird daher minimiert bzw. ganz vermieden.

In einem weiteren Aspekt betrifft die Erfindung ein Verfahren zur Herstellung einer Halterung für eine Scheinwerfereinheit mittels Kunststoffspritzguss. Vorzugsweise sind die vorderen elastischen Mittel nach vorne gekrümmt und die hinteren elastischen Mittel nach hinten gekrümmt, so dass eine leichte Entformbarkeit der Halterung aus dem Kunststoffspritzgusswerkzeug ohne Schieber möglich ist.

In einem weiteren Aspekt betrifft die Erfindung eine Kraftfahrzeugfronteinheit mit einem Trägerteil und einer erfindungsgemäßen Halterung.

### Ausführungsbeispiel

Im Weiteren werden Ausführungsformen der Erfindung mit Bezugnahme auf die Zeichnungen näher erläutert. Es zeigen:
- Figur 1: eine perspektivische Ansicht einer ersten Ausführungsform einer erfin- dungsgemäßen Halterung,
- Figur 2: eine Draufsicht auf eine weitere Ausführungsform einer erfindungsge- mäßen Halterung,
- Figur 3: die Ausführungsform der Figur 2 in einer perspektivischen Teilansicht.

Einander entsprechende Elemente der nachfolgenden Figurenbeschreibungen sind jeweils mit denselben Bezugszeichen gekennzeichnet.

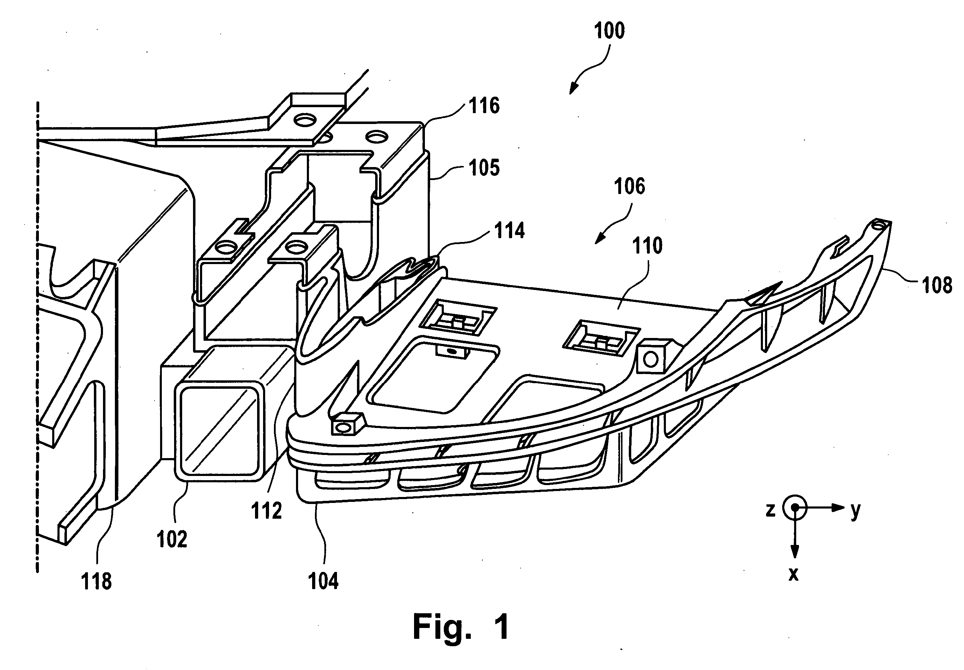

Die Figur 1 zeigt einen Träger 100 einer Fronteinheit eines Kraftfahrzeugs. Der Träger 100 hat ein Trägerteil 102. Das Trägerteil 102 besteht aus einem Stahl- oder Aluminiumprofil.

Eine Halterung 104 für eine in der Figur 1 nicht dargestellte Scheinwerfereinheit ist an dem Trägerteil 102 befestigt. Hierzu dienen Befestigungsmittel 105, die in der hier betrachteten Ausführungsform auf dem Trägerteil 102 angeordnet sind und beispielsweise durch eine Schraubverbindung mit dem Trägerteil 102 fest verbunden sind.

Die Halterung 104 hat einen Aufnahmebereich 106 für die Scheinwerfereinheit. Der Aufnahmebereich 106 wird nach vorne durch einen Haltearm 108 begrenzt. Von dem Haltearm geht eine Aufnahmeebene 110 aus. Zur Montage wird die Scheinwerfereinheit in den durch den Haltearm 108 und die Aufnahmeebene 110 definierten Aufnahmebereich 106 positioniert und dort beispielsweise mittels Schnappverbindungen fixiert.

Der Aufnahmebereich 106 ist über elastische Mittel 112 und 114 mit den Befestigungsmitteln 105 verbunden. Das in der x-Richtung des Fahrzeugs vorne angeordnete elastische Mittel 112 hat eine Wandung in z-Richtung, die in der x/y-Ebene nach vorne gekrümmt verläuft. Die elastischen Mittel 114 werden ebenfalls durch eine Wandung in z-Richtung gebildet, die in der x/y-Ebene nach hinten gekrümmt verläuft. Aufgrund dessen sind die beiden Scheitel der Krümmungen der elastischen Mittel 112 und 114 maximal voneinander beabstandet.

Die elastischen Mittel 112 und 114 bestehen aus einem Kunststoff, wobei die Wandstärke der Wandungen so gewählt ist, dass eine Verformung durch Ziehen oder Drücken an der Halterung 104 in y-Richtung erfolgen kann. Dies ermöglicht einen Toleranzausgleich bei der Montage.

Beispielsweise wird die Halterung 104 als ein Kunststoffspritzgussteil bestehend aus den Befestigungsmitteln 105, dem Aufnahmebereich 106, dem Haltearm 108, der Aufnahmeebene 110 sowie den elastischen Mitteln 112 und 114 hergestellt. In der hier betrachteten Ausführungsform hat die Halterung 104 einen metallischen Einleger 116 im Bereich der Befestigungsmittel 105. Durch den Einleger 116 kann beispielsweise eine Schlossaufnahme gebildet werden.

Der Aufnahmebereich 106 für die Scheinwerfereinheit und insbesondere die Aufnahmeebene 110 erstreckt sich im Wesentlichen zwischen dem vorderen elastischen Element 112 und dem hinteren elastischen Element 114. Durch die beiden voneinander beabstandeten elastischen Mittel 112 und 114 wird die Stabilität des Aufnahmebereichs 106 in z-Richtung verstärkt, wobei die Flexibilität in y-Richtung gewahrt wird. Aufgrund der erhöhten Stabilität kann das Scheinwerferzittern bei Betrieb des Kraftfahrzeugs verringert oder ganz vermieden werden, wobei dennoch bei der Montage der Fronteinheit eine Toleranzausgleichmöglichkeit in y-Richtung besteht. Vorzugsweise erstreckt sich die Aufnahmeebene 110 zumindest bis zum Schwerpunkt der Scheinwerfereinheit nach hinten, um das Scheinwerferzittern möglichst vollständig zu unterbinden.

Die Figur 1 zeigt links neben dem Trägerteil 102 weitere Aggregate 118, wie zum Beispiel Lüftungskanäle und Kühlwasserkanäle.

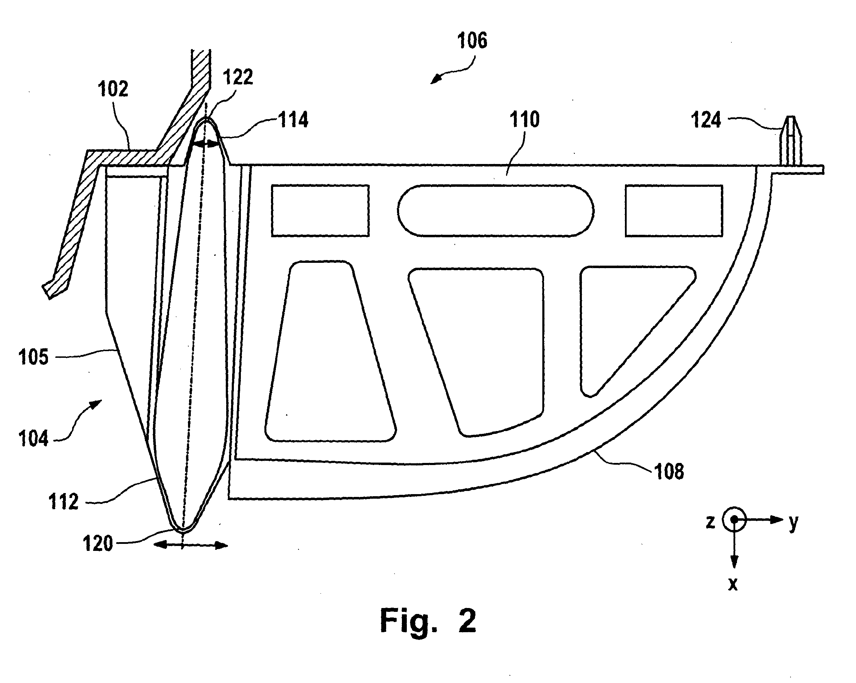

Die Figur 2 zeigt eine weitere Ausführungsform einer erfindungsgemäßen Halterung 104. Der durch die Aufnahmeebene 110 und den Haltearm 108 gebildete Aufnahmebereich 106 ist über die elastischen Mittel 112 und 114 mit den Befestigungsmitteln 105 verbunden. Mit Hilfe der Befestigungsmittel 105 ist die Halterung 104 an dem Trägerteil 102 befestigt.

Die elastischen Mittel 112 und 114 werden jeweils durch eine Wandung in z-Richtung gebildet. Das vordere elastische Mittel 112 ist dabei nach vorne gekrümmt und das hintere elastische Mittel 114 nach hinten. Die sich aufgrund der Krümmungen ergebenden Scheitel 120 und 122 der elastischen Mittel 112 bzw. 114 liegen einander gegenüber und zwar in etwa auf der x-Achse. Bei der Montage können die elastischen Mittel 112 und 114 um die jeweiligen Scheitel 120 bzw. 122 gestreckt oder gestaucht werden, um so einen Toleranzausgleich hinsichtlich der Beabstandung des Aufnahmebereichs 106 von dem Trägerteil 102 in y-Richtung zu ermöglichen.

Von besonderem Vorteil ist hierbei, dass der Abstand zwischen den Scheiteln 120 und 122 größer ist als die Erstreckung der Aufnahmeebene 110 in x-Richtung. Dies sorgt für eine maximale Stabilität und damit eine sichere Unterbindung des Scheinwerferzitterns.

An dem von den Befestigungsmitteln 105 entfernt liegendem Ende des Haltearms 108 ist ein Positionierstift 124 angeordnet. Bei der Montage wird der Positionierstift 124 in ein Montageloch in der Kotflügelbank des Kraftfahrzeugs eingeführt. Hierdurch wird die Position des Aufnahmebereichs 106 in y-Richtung festgelegt und der hierfür erforderliche Toleranzausgleich wird durch Dehnung oder Stauchung des durch die elastischen Mittel 112 und 114 gebildeten balgförmigen Bereichs, der die Befestigungsmittel 105 mit dem Aufnahmebereich 106 verbindet, geschaffen.

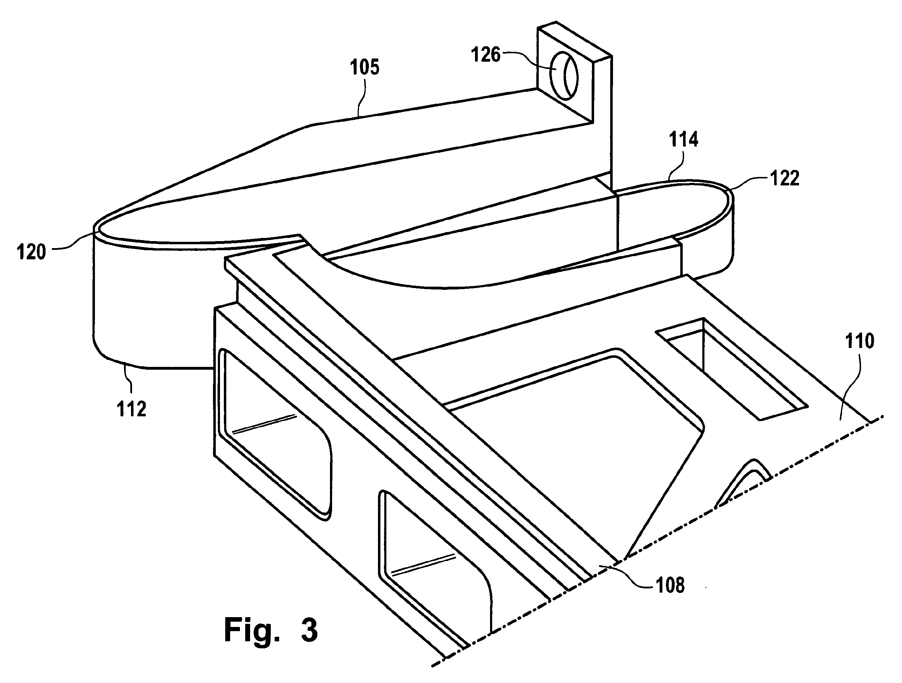

Die Figur 3 zeigt die Ausführungsform der Figur 2 in einer perspektivischen Ansicht. Wie in der Figur 3 dargestellt, haben die Befestigungsmittel 105 ein Loch 126 zur Verschraubung mit dem Trägerteil 102. Der Haltearm 108 ist in seinem oberen Bereich schienenförmig ausgebildet, um einen Stoßfängerüberzug aufzunehmen.

### Bezugszeichenliste

- 100: Träger
- 102: Trägerteil
- 104: Halterung
- 105: Befestigungsmittel
- 106: Aufnahmebereich
- 108: Haltearm
- 110: Aufnahmeebene
- 112: elastische Mittel
- 114: elastische Mittel
- 116: Einleger
- 118: Aggregate
- 120: Scheitel
- 122: Scheitel
- 124: Positionierstift
- 126: Loch

## Patentansprüche

1. Halterung für eine Scheinwerfereinheit mit
- Befestigungsmitteln (105) zur Befestigung der Halterung an einem Trägerteil (102) einer Fronteinheit eines Kraftfahrzeugs,
- einem Aufnahmebereich (106) für die Scheinwerfereinheit,
- ersten und zweiten voneinander beabstandeten elastischen Mitteln (112, 114) zwischen den Befestigungsmitteln und dem Aufnahmebereich,
wobei sich der Aufnahmebereich an einer Seite der ersten und zweiten elastischen Mittel erstreckt, wobei die ersten und zweiten elastischen Mittel so ausgebildet sind, dass der Aufnahmebereich für die Scheinwerfereinheit zum Einbau der Halterung in ein Kraftfahrzeug im wesentlichen quer zur Fahrrichtung des Kraftfahrzeugs translatorisch verschiebbar ist, **dadurch gekennzeichnet, dass** die ersten und zweiten elastischen Mittel in einander entgegen gesetzten Richtungen gekrümmt verlaufen.

2. Halterung nach Anspruch 1, wobei die ersten elastischen Mittel an einer vorderen Begrenzung des Aufnahmebereichs und die zweiten elastischen Mittel an einer hinteren Begrenzung des Aufnahmebereichs angeordnet sind, und wobei die ersten elastischen Mittel nach vorne gekrümmt und die zweiten elastischen Mittel nach hinten gekrümmt sind.

3. Halterung nach einem der vorhergehenden Ansprüche, wobei die ersten und zweiten elastischen Mittel eine Relativbewegung zwischen den Befestigungsmitteln und dem Aufnahmebereich in einer horizontalen Richtung zum Toleranzausgleich ermöglichen.

4. Halterung nach einem der vorhergehenden Ansprüche, wobei die ersten und zweiten elastischen Mittel einen balgförmigen Bereich bilden.

5. Halterung nach einem der vorhergehenden Ansprüche, wobei die ersten und zweiten elastischen Mittel jeweils durch eine Wandung mit einer Wandstärke gebildet werden, die eine Verformung zum Toleranzausgleich ermöglicht.

6. Halterung nach einem der vorhergehenden Ansprüche, mit einem Positionierstift (124) zur Montage der Halterung an einer Kotflügelbank, wobei der Positionierstift bezüglich der elastischen Mittel auf der anderen Seite des Aufnahmebereichs angeordnet ist.

7. Halterung nach einem der vorhergehenden Ansprüche, wobei sich der Aufnahmebereich nach hinten bis zu dem Schwerpunkt der Scheinwerfereinheit erstreckt.

8. Verfahren zur Herstellung einer Halterung nach einem der vorhergehenden Ansprüche durch Kunststoffspritzguss.

9. Fronteinheit mit einem Trägerteil und einer Halterung nach einem der vorhergehenden Ansprüche 1 bis 7.

## Claims

1. Holding device for a headlight unit having
- fastening means (105) for fastening the holding device to a carrier part (102) of a front unit of a motor vehicle,
- a receiving region (106) for the headlight unit, and
- first and second elastic means (112, 114) which are spaced apart from one another between the fastening means and the receiving region,
the receiving region extending on one side of the first and second elastic means, the first and second elastic means being configured in such a way that, for the installation of the holding device into a motor vehicle, the receiving region for the headlight unit can be displaced translatorily substantially transversely with respect to the driving direction of the motor vehicle, **characterized in that** the first and second elastic means extend in a curved manner in opposite directions.

2. Holding device according to Claim 1, the first elastic means being arranged on a front boundary of the receiving region and the second elastic means being arranged on a rear boundary of the receiving region, and the first elastic means being curved to the front and the second elastic means being curved to the rear.

3. Holding device according to one of the preceding claims, the first and second elastic means making a relative movement possible between the fastening means and the receiving region in a horizontal direction for tolerance compensation.

4. Holding device according to one of the preceding claims, the first and second elastic means forming a bellows-shaped region.

5. Holding device according to one of the preceding claims, the first and second elastic means being formed in each case by a wall having a wall thickness which makes a deformation for tolerance compensation possible.

6. Holding device according to one of the preceding claims, having a positioning pin (124) for mounting the holding device on a wing support, the positioning pin being arranged on the other side of the receiving region with regard to the elastic means.

7. Holding device according to one of the preceding claims, the receiving region extending to the rear as far as the centroid of the headlight unit.

8. Method for producing a holding device according to one of the preceding claims by plastic die-casting.

9. Front unit having a carrier part and a holding device according to one of the preceding claims 1 to 7.

## Revendications

1. Moyen d'attache pour une unité de phare, comprenant :
- des moyens de fixation (105) pour la fixation du moyen d'attache à une partie de support (102) d'une unité avant d'un véhicule automobile,
- une région de réception (106) pour l'unité de phare,
- des premiers et deuxièmes moyens élastiques espacés les uns des autres (112, 114) entre les moyens de fixation et la région de réception,
la région de réception s'étendant d'un côté des premiers et deuxièmes moyens élastiques, les premiers et deuxièmes moyens élastiques étant réalisés de telle sorte que la région de réception pour l'unité de phare puisse être déplacée en translation pour le montage du moyen d'attache dans un véhicule automobile essentiellement transversalement à la direction d'avance du véhicule automobile, **caractérisé en ce que** les premiers et deuxièmes moyens élastiques s'étendent sous forme courbe dans des directions opposées.

2. Moyen d'attache selon la revendication 1, dans lequel les premiers moyens élastiques sont disposés sur une limitation avant de la région de réception et les deuxièmes moyens élastiques sont disposés sur une limitation arrière de la région de réception, et les premiers moyens élastiques sont courbés vers l'avant et les deuxièmes moyens élastiques sont courbés vers l'arrière.

3. Moyen d'attache selon l'une quelconque des revendications précédentes, dans lequel les premiers et deuxièmes moyens élastiques permettent un mouvement relatif entre les moyens de fixation et la région de réception dans une direction horizontale en vue de la compensation des tolérances.

4. Moyen d'attache selon l'une quelconque des revendications précédentes, dans lequel les premiers et deuxièmes moyens élastiques forment une région en forme de soufflet.

5. Moyen d'attache selon l'une quelconque des revendications précédentes, dans lequel les premiers et deuxièmes moyens élastiques sont formés à chaque fois par une paroi ayant une épaisseur de paroi qui permet une déformation en vue de la compensation des tolérances.

6. Moyen d'attache selon l'une quelconque des revendications précédentes, comprenant une goupille de positionnement (124) pour le montage du moyen d'attache sur un support d'aile, la goupille de positionnement étant disposée par rapport aux moyens élastiques de l'autre côté de la région de réception.

7. Moyen d'attache selon l'une quelconque des revendications précédentes, dans lequel la région de réception s'étend vers l'arrière jusqu'au centre de gravité de l'unité de phare.

8. Procédé de fabrication d'un moyen d'attache selon l'une quelconque des revendications précédentes, par moulage par injection de plastique.

9. Unité avant comprenant une partie porteuse et un moyen d'attache selon l'une quelconque des revendications précédentes 1 à 7.
